Europäisches Patentamt

European Patent Office

Office européen des brevets

(19)

(11) Publication number: **0 250 185**
B1

# EUROPEAN PATENT SPECIFICATION

(45) Date of publication of the patent specification:
16.08.90

(51) Int. Cl.⁵: **B60T 7/08, F16C 1/22**

(21) Application number: **87305274.0**

(22) Date of filing: **15.06.87**

(54) **Hand-brake assembly for a vehicle.**

(30) Priority: **17.06.86 GB 8614713**

(43) Date of publication of application:
**23.12.87 Bulletin 87/52**

(45) Publication of the grant of the patent:
**16.08.90 Bulletin 90/33**

(84) Designated Contracting States:
**AT BE CH DE ES FR GB GR IT LI LU NL SE**

(56) References cited:
**EP-A- 0 040 574**
**DE-B- 1 152 897**
**FR-A- 2 278 982**
**FR-A- 2 504 475**
**FR-A- 2 553 479**

(73) Proprietor: **Metallifacture Limited, Mansfield Road, Redhill Nottingham NG5 8PY(GB)**

(72) Inventor: **Walters, John Edward, 292 St.Albans Road, Bulwell Nottingham(GB)**

(74) Representative: **Bassett, Richard Simon et al, ERIC POTTER & CLARKSON St. Mary's Court St. Mary's Gate, Nottingham NG1 1LE(GB)**

## Description

This invention relates to a hand-brake assembly for a vehicle.

In the art of hand-brakes for motor vehicles it has been usual to provide a lever attached through a brake cable to a brake linkage. The lever is held in its operative position, tensioning the brake cable, by a ratchet mechanism. The ratchet mechanism is normally disengageable by means of a connecting rod operable from a button located at the end of the lever. This type of hand-brake has a number of undesirable features. As sufficient tension must be created in the brake cable with a single deflection of the lever, the lever must be relatively long and the "pull" on the lever must be strong because of the relatively small mechanical advantage. This type of hand-brake also requires frequent adjustment to take up slack in the brake cable as the brake pads wear. When the brake cable becomes slack the lever must be deflected to a greater degree in order to actuate the brake. This increased deflection is inconvenient to achieve as the lever, in its operative position, nears a vertical orientation.

Hand-brakes have been proposed which take account of some of the problems outlined above. One such hand-brake assembly for a vehicle is described in DE-B 1 152 897. The described assembly comprises a hand-actuable lever mounted on a body for angular movement to apply tension to a brake cable; a releasable engagement device for releasable engagement between the lever and attachment means for the cable, the device comprising an elongate member defining a rack and an angularly movable means defining a first pawl releasably engageable with the rack; catch means comprising a second pawl engageable with the said rack for holding the brake cable in the tensioned position; and releasable means for releasing the catch means to release the brake cable; the device being engaged as the lever is moved in a first direction whereby to apply tension to the brake cable and disengaged as the lever moves in the opposite direction. Whilst this assembly deals with the problem of slack in the brake cable, in order to apply the brake the lever must be moved to and fro, movement in each direction applying gradually increasing tension to the brake cable: such a movement, especially when the lever is near the vertical orientation, is inconvenient.

The present invention sets out to overcome the above mentioned problems.

The present invention provides a hand-brake assembly for a vehicle comprising: a hand-actuable lever mounted on a body for angular movement to apply tension to a brake cable; a releasable engagement device for releasable engagement between the lever and attachment means for the cable, the device comprising; an elongate member defining a rack and an angularly movable means defining a first pawl releasably engageable with the rack; catch means comprising a second pawl engageable with the said rack for holding the brake cable in the tensioned position; and releasable means for releasing the catch means to release the brake cable; the device being engaged as the lever is moved in a first direction whereby to apply tension to the brake cable and disengaged as the lever moves in the opposite direction wherein the lever is mounted for movement in the second direction towards a rest position when the lever is released and the catch means holds the brake cable independently of the angular position of the lever.

With this arrangement, the lever always returns to the rest position when released and is thus conveniently out of the user's way, both during normal occupation of the car and in the event that a hurried exit needs to be made, perhaps because of a fire. When the brake cable becomes slack, sufficient tension may be applied to the brake cable to operate the brakes by a number of deflections of the lever from the rest position. The lever can, therefore, always be actuated from the most advantageous position with maximum mechanical advantage. The arrangement automatically takes up slack in the brake cable.

Having the engagement device and the catch on the same rack enables a neat and compact assembly to be provided.

Reference is made to the accompanying drawings, wherein:

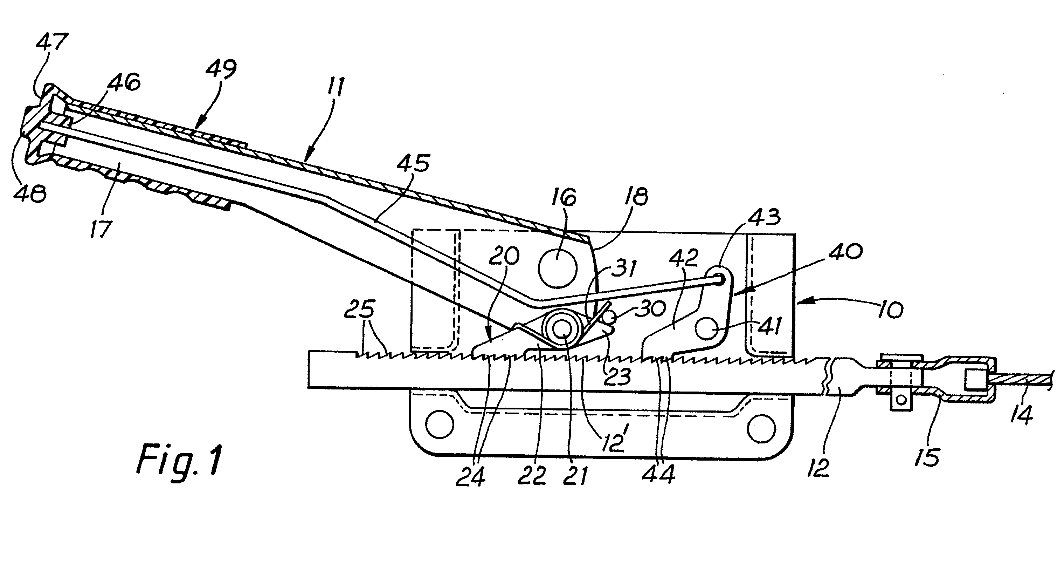

Figure 1 is a sectional side view of a preferred hand-brake assembly according to the present invention.

Referring to Figure 1 there is shown a body in the form of a frame 10 for mounting in a vehicle. The frame mounts an elongate member 12 for axial movement, the member having attachment means 15 at one end for attachment to a brake cable 14. A hand-actuable lever 11 is pivotally mounted near one end 18 on the frame by a first pivot pin 16 and has a grippable part 17 at the opposite end. The arrangement is such that an upward pull on the lever to deflect it about the pivot pin axially moves the elongate member 12 in the frame to tension the brake cable 14.

The elongate member 12 is provided with teeth 25, spaced longitudinally, to define a rack 12'. An angularly movable means in the form of a first pawl 20 is pivotally mounted on the lever 11 by a second pivot pin 21 beneath the first pivot pin 16. The first pawl 20 comprises a main pawl section 22 and a projecting arm 23 with the second pivot pin 21 located between them. The main pawl section 22 has a number of teeth 24 biased into engagement with the teeth 25 of the rack 12'. The teeth are inclined away from the attachment means 15. A spring 31 biases the pawl 22 to engage the rack teeth.

The lever is biased by gravity into a parked position and can be upwardly angularly deflected by pulling upwardly on the lever. This action moves the first pawl 20 relative to the frame in a brake-actuating direction. The teeth 24 of the first pawl 20 are engaged with the teeth 25 of the rack 12, under the bias of the spring 31 and, therefore, the first pawl 20 forces the rack 12, also to move in the brake-actuating direction to tension the brake cable.

A lug 30 is provided on the frame 10 and contacts and deflects the first pawl 20 out of engagement with the rack when the lever is returned towards the parked position.

A catch means in the form of a second pawl 40 is provided to engage the rack and maintain the brake cable under tension. The pawl 40 comprises a main pawl portion 42 having teeth 44 for engaging the rack teeth 25. The pawl is pivoted on the frame by a pivot pin 41. The second pawl 40 has an arm 43 to which is pivotally connected a connecting rod 45, in turn connected to a resilient push button 48. The push button 48 biases the second pawl 40 into engagement with the rack 12'.

The lever 11 is of a channel form with the grippable part 17 formed into a hollow cylinder. The connecting rod 45 extends through the lever 11 and is received into a socket 46 in an end cover 47 which covers the end of the grippable part 17 forming a hand grip 49. An external portion of the end cover 47 serves as the button 48.

The end cover is a one-piece plastics moulding.

In operation the lever 11 is pulled angularly upwardly from the parked position, so that the first pawl 20 loses contact with the lug 30 and the spring 31 biases the first pawl 20 into engagement with the rack teeth 25. The angular movement of the lever 11, therefore, forces the rack member 12 to move relative to the frame 10 to tension the brake cable 14. The lever 11 is then released so that it returns to the parked position under gravitational bias. The second pawl 40 prevents return of the rack member 12 and maintains the tension in the brake cable 14. If the brake cable 14 tension is insufficient, the lever 11 can be actuated again in the same manner to increase the tension. The assembly can, therefore, operate with substantial slack in the brake cable 14.

To release the brake cable 14 tension, the button 48 is depressed so as to lift the second pawl 40 out of engagement with the rack teeth 25.

## Claims

1. A hand-brake assembly for a vehicle comprising: a hand-actuable lever (11) mounted on a body (10) for angular movement to apply tension to a brake cable (14); a releasable engagement device (20, 12') for releasable engagement between the lever and attachment means (15) for the cable, the device comprising an elongate member (12) defining a rack (12') and an angularly movable means defining a first pawl (20) releasably engageable with the rack; catch means comprising a second pawl (40) engageable with the said rack for holding the brake cable in the tensioned position; and releasable means (45, 43) for releasing the catch means to release the brake cable; the device (20, 12') being engaged as the lever is moved in a first direction whereby to apply tension to the brake cable and disengaged as the lever moves in the opposite direction characterised in that the lever (11) is mounted for movement in the second direction towards a rest position when the lever is released and in that the catch means holds the brake cable independently of the angular position of the lever.

2. A hand-brake assembly according to Claim 1, wherein said angularly movable means is resiliently biased into engagement with the elongate member and a disengaging member (30) is mounted on the body to deflect the angularly movable means out of engagement with the elongate member as the lever is moved to the rest position.

3. A hand-brake assembly according to Claim 1 or 2, wherein the rack is substantially linear.

4. A hand-brake assembly according to any one of Claims 1 to 3 wherein the releasable means for releasing the catch means comprises an elongate connector (45) connected at one end to a push button (48) mounted at an end of the lever, the connector extending within the lever, the catch means being resiliently biased into engagement with the elongate member and the connector being actuable by the button to release the catch means.

5. A hand-brake assembly according to Claim 4, wherein the push button is defined by a resilient synthetic moulding secured to the lever, the resilience of the button serving to bias the catch means into engagement with the elongate member.

## Patentansprüche

1. Fahrzeughandbremsventil mit einem von Hand betätigbaren Hebel (11), der an einem Gehäuse (10) schwenkbeweglich angeordnet ist, um Spannung auf ein Bremskabel (14) aufzubringen, mit einer lösbaren Betätigungseinrichtung (20, 12') zwischen Hebel und Befestigung (15) des Bremskabels, die ein langgestrecktes Teil (12) in Form einer Zahnstange (12') und ein schwenkbares Teil in Form einer ersten, lösbar mit der Zahnstange zusammenwirkende Klinke (20) aufweist, mit einer Fangeinrichtung, die eine zwei, mit der Zahnstange zusammenwirkende Klinke (40) zum Festhalten des unter Spannung stehenden Bremskabels aufweist, und mit einer Lösevorrichtung (45, 43) zum Ausklinken der Fangeinrichtung zum Zwecke der Freigabe des Bremskabels, wobei die Betätigungseinrichtung (20, 12') zum Aufbringen von Spannung auf das Bremskabel greift, wenn der Hebel in einer ersten Richtung verschwenkt wird, und außer Kontakt kommt, wenn der Hebel in die entgegengesetzte Richtung verschwenkt wird, dadurch gekennzeichnet, daß der Hebel (11) in gelöstem Zustand in der zweiten Richtung in die Bereitschaftsstellung verschwenkbar ist, und daß die Fangeinrichtung das Bremskabel unabhängig von der Winkelstellung des Hebels festhält.

2. Fahrzeughandbremseinheit nach Anspruch 1, dadurch gekennzeichnet, daß das schwenkbare Teil durch Federkraft in Kontakt mit dem langgestreckten Teil kommt, und daß ein Aushebeteil (30) am Gehäuse vorgesehen ist, um das schwenkbare Teil vom langgestreckten Teil zu lösen, wenn der Hebel in seine Bereitschaftsstellung verschwenkt wird.

3. Fahrzeughandbremseinheit nach Anspruch 1 oder 2, dadurch gekennzeichnet, daß die Zahnstange im wesentlichen linear ausgebildet ist.

4. Fahrzeughandbremseinheit nach Anspruch 1 bis 3, dadurch gekennzeichnet, daß die Lösevorrichtung zum Ausklinken der Fangeinrichtung ein längliches Verbindungsglied (45) aufweist, das an einem Ende Verbindung zu einem am freien Ende des Hebels angeordneten Druckknopf (48) hat und sich durch den Hebel hindurch erstreckt, daß die Fangeinrichtung federnd nachgiebig in Konakt zu dem langgestreckten Teil gehalten ist, und daß das Verbindungsglied zum Lösen der Fangeinrichtung über den Druckknopf betätigbar ist.

5. Fahrzeughandbremseinheit nach Anspruch 4, dadurch gekennzeichnet, daß der Druckknopf als nachgiebiges Kunststofformteil ausgebildet und am Hebel angeordnet ist, wobei die Nachgiebigkeit des Druckknopfs zur federnden Beaufschlagung der Fangeinrichtung während des Kontakts am langgestreckten Teil genutzt wird.

**Revendications**

1. Ensemble de frein à main pour un véhicule comprenant: un levier actionnable à la main (11) monté sur un corps (10) permettant au mouvement angulaire d'appliquer une tension sur un câble de frein (14); un dispositif d'engrènement libérable (20, 12') pour l'engrènement libérable entre le levier et le dispositif de fixation (15) pour le câble, le dispositif comprenant un élément allongé (12) définissant une crémaillère (12') et un dispositif mobile angulairement définissant un premier cliquet (20) pouvant coopérer de façon libérable avec la crémaillère; un dispositif de blocage ou d'arrêt comprenant un second cliquet (40) pouvant coopérer avec la crémaillère pour maintenir le câble de frein dans la position tendue; et des moyens libérables (45, 43) destinés à libérer le dispositif de blocage ou d'arrêt pour relâcher le câble de frein; le dispositif (20, 12') étant en prise lorsque le levier est déplacé dans une première direction, ce qui permet d'appliquer la tension au câble de frein, et étant désolidarisé lorsque le levier se déplace dans la direction opposée, caractérisé en ce que le levier (11) est monté de façon à pouvoir être déplacé dans la seconde direction vers une position de repos lorsque le câble est libéré et en ce que le dispositif de blocage ou d'arrêt maintient le câble de frein indépendamment de la position angulaire du levier.

2. Ensemble de frein à main selon la revendication 1, dans lequel le dispositif mobile angulairement est sollicité de façon élastique pour venir en contact avec l'élément allongé et un élément de désolidarisation est montée sur le corps pour déplacer le dispositif mobile angulairement hors d'engrènement avec l'élément allongé lorsque le levier est déplacé sur la position de repos.

3. Ensemble de frein à main selon la revendication 1 ou 2, dans lequel la crémaillère est sensiblement linéaire.

4. Ensemble de frein à main selon l'une quelconque des revendications 1 à 3, dans lequel le dispositif libérable destiné à libérer le dispositif de blocage ou d'arrêt comprend un élément de liaison allongé (45) raccordé sur une extrémité à un bouton-poussoir (48) monté sur une extrémité du levier, l'élément de liaison s'étendant à l'intérieur du levier, le dispositif de blocage ou d'arrêt étant sollicité élastiquement pour venir en contact avec l'élément allongé et l'élément de liaison pouvant être actionné par le bouton-poussoir pour libérer le dispositif de blocage ou d'arrêt.

5. Ensemble de frein à main selon la revendication 4, dans lequel le bouton poussoir est défini par un moulage en plastique souple fixé sur le levier, l'élasticité du bouton servant à solliciter le dispositif de blocage ou d'arrêt pour venir en engrènement avec l'élément allongé.

*Fig.1*